# EUROPÄISCHE PATENTANMELDUNG

(11) **EP 2 538 289 A1**
(43) Veröffentlichungstag der Anmeldung: **26.12.2012**
(21) Anmeldenummer: 11170848.3
(22) Anmeldetag: 22.06.2011
(51) Int. Cl.: G05B 19/05, G06F 17/50, G06F 21/00, H04L 9/00

(54) **Verschlüsselung eines Automatisierungsprogramms**

(71) Anmelder: SIEMENS AKTIENGESELLSCHAFT, 80333 München (DE)
(72) Erfinder: Kohler, Benjamin, 90409 Nürnberg (DE); Riedl, Wolfgang, 90459 Nürnberg (DE); Rosenberg, Jens Ansgar, 90459 Nürnberg (DE); Wittig, Sebastian, 90522 Oberasbach (DE)

(57) **Zusammenfassung**

Die Informationssicherheit in Kollaborationsszenarien beim Entwerfen von Automatisierungsprojekten soll erhöht werden. Daher wird eine Engineeringanordnung zum Projektieren und Inbetriebnehmen einer automatisierten Vorrichtung mit einem ersten Engineeringsystem (5) zum Erstellen eines ersten Teils eines Automatisierungsprogramms, mit dem die automatisierte Vorrichtung steuerbar ist, und einem zweiten Engineeringsystem (6) zum Erstellen eines zweiten Teils des Automatisierungsprogramms vorgeschlagen. Die Engineeringanordnung weist außerdem ein erstes Datennetz (7), an das das erste Engineeringsystem (5) angeschlossen ist, und ein zweites Datennetz (8), an das das zweite Engineeringsystem (6) angeschlossen ist, auf. Das erste Datennetz (7) steht mit dem zweiten Datennetz (8) in Kommunikationsverbindung, sodass Daten zwischen dem ersten Engineeringsystem (5) und dem zweiten Engineeringsystem (6) austauschbar sind. Eine Verschlüsselungsschnittstelleneinrichtung (11) ist zwischen das erste Datennetz (7) und das zweite Datennetz (8) geschaltet. Sie bildet eine Kommunikationsschnittstelle zwischen beiden Datennetzen (7, 8) und mit ihr sind die Daten beim Austausch zwischen dem ersten Engineeringsystem (5) und dem zweiten Engineeringsystem (6) verschlüsselbar oder entschlüsselbar.

## Beschreibung

Die vorliegende Erfindung betrifft eine Engineeringanordnung zum Projektieren und Inbetriebnehmen einer automatisierten Vorrichtung. Die Anordndung weist ein erstes Engineeringsystem zum Erstellen eines ersten Teils eines Automatisierungsprogramms, mit dem die automatisierte Vorrichtung steuerbar ist, und ein zweites Engineeringsystem zum Erstellen eines zweiten Teils des Automatisierungsprogramms auf. Darüber hinaus verfügt sie über ein erstes Datennetz, an das das erste Engineeringsystem angeschlossen ist, und über ein zweites Datennetz, an das das zweite Engineeringsystem angeschlossen ist, wobei das erste Datennetz mit dem zweiten Datennetz in Kommunikationsverbindung steht, sodass Daten zwischen dem ersten Engineeringsystem und dem zweiten Engineeringsystem austauschbar sind. Darüber hinaus betrifft die vorliegende Erfindung ein entsprechendes Verfahren zum Projektieren und Inbetriebnehmen einer automatisierten Vorrichtung.

Die zunehmende Vernetzung von Computern zusammen mit einer stetigen Erhöhung der verfügbaren Übertragungsbandbreite ermöglicht heute Kollaborationsszenarien, bei denen verschiedene über ein Datennetzwerk verbundene Partner eine komplexe Automatisierungslösung (hier auch Automatisierungsprojekt oder Automatisierungsprogramm genannt) gemeinsam erstellen und bearbeiten.

Aus der gemeinsamen Arbeit an einem Automatisierungsprojekt ergeben sich Anforderungen zum Schutz des Know-How der Beteiligten:
i) Schutz des eigenen Know-How gegenüber den Partnern. Dabei wird davon ausgegangen, dass die Projektpartner Zugang zu den gemeinsamen Projektdaten haben dürfen, aber spezielle Objekte bzw. Datensätze im Projekt vor einem (Lese-) Zugriff geschützt werden sollen.
ii) Schutz des gesamten in die Automatisierungslösung eingebrachten Know-How gegenüber Dritten. Diese Anforderung wird dann relevant, wenn der Austausch der Projektdaten zwischen den Projektpartnern über unsichere Datenverbindungen erfolgt oder wenn die Ablage der Projektdaten an potentiell unsicheren Speicherorten erfolgt.

Üblicherweise werden zum Schutz des geistigen Eigentums bzgl. Datensätzen von Automatisierungsprojekten Verschlüsselungsverfahren eingesetzt, mit denen verhindert wird, dass Unbefugte verschlüsselte Daten einsehen können. Bekannt ist beispielsweise die Verschlüsselung von einzelnen Objekten bzw. Datensätzen im Automatisierungsprojekt durch das Engineeringsystem, mit dem die Objekte bzw. Datensätze erstellt werden. Zur Verschlüsselung gibt ein Anwender ein Passwort ein, das später wieder zur Entschlüsselung der Objekte benötigt wird. Verschiedene Objekte lassen sich mit verschiedenen Passwörtern verschlüsseln. Mit diesem Vorgehen lässt sich die obige Anforderung i) voll und die Anforderung ii) teilweise erfüllen.

Die Anforderung ii) lässt sich durch Verschlüsselung des kompletten Automatisierungsprojekts erfüllen. Dazu werden heute normalerweise externe Verschlüsselungstools verwendet.

Eine Verschlüsselung bringt jedoch eigene Probleme mit sich. Zum berechtigten Zugriff auf die Daten müssen die Benutzer die dazu notwendigen Passwörter kennen. Wenn mehrere Personen auf geschützte Daten zugreifen sollen, muss dafür gesorgt werden, dass diese Personen sich über das jeweilige gültige Passwort informieren. Wird der Zugriff auf verschlüsselte Daten benötigt und ist das Passwort nicht bekannt, kommt es zu Verzögerungen im Arbeitsablauf, bis eine Person mit Kenntnis des Passworts gefunden wird und die Entschlüsselung vornehmen kann. Zur Lösung dieses Problems gibt es verschiedene manuelle" Ansätze:
a) Definition eines firmenweiten Standardpassworts", das stets gleich ist und das alle Mitarbeiter kennen. Damit ist zunächst sichergestellt, dass das Passwort nicht verloren geht. Probleme ergeben sich aus dem hohen Bekanntheitsgrad des Passworts, sodass nicht sichergestellt werden kann, dass das Passwort nicht schließlich doch über den Kreis der befugten Mitarbeiter hinaus bekannt wird.
b) Benennung einzelner Mitarbeiter, die das Passwort kennen. Diese Mitarbeiter werden immer herangeholt, wenn Daten zu ver- bzw. entschlüsseln sind. Aus diesem Vorgehen ergibt sich das Problem, dass aufwendig sichergestellt werden muss, dass immer dann einer dieser Mitarbeiter verfügbar ist, wenn auf die verschlüsselten Daten zugegriffen werden soll.
c) Bearbeiter von einzelnen Objekten im Automatisierungsprojekt vergeben die Passwörter selbstständig. In vielen Fällen wird ein bestimmtes Objekt nur von einem einzelnen oder nur wenigen Bearbeitern modifiziert oder benutzt, sodass es ausreicht, dass nur die betroffenen Bearbeiter das Passwort kennen müssen. Ggf. muss man das Passwort von den Kollegen erfragen, die es kennen. Die Probleme sind hier:
   - Es muss sichergestellt sein, dass die verwendeten Passwörter auch langfristig zur Verfügung stehen - auch nach Abschluss der Projektarbeiten.
   - Es kommt zu Verzögerungen im Arbeitsablauf, wenn ein Bearbeiter, der das Passwort noch nicht kennt, auf ein verschlüsseltes Objekt zugreifen muss.
   - Es ist oft unklar, welcher Personenkreis ein bestimmtes Passwort kennt. Dabei besteht immer die Möglichkeit, dass das Passwort über den befugten Kreis hinaus bekannt wird.

Die Aufgabe der vorliegenden Erfindung besteht somit darin, den Schutz von Automatisierungsdaten bei Multi-User-Engineeringanordnungen zu vereinfachen.

Erfindungsgemäß wird diese Aufgabe gelöst durch eine Engineeringanordnung zum Projektieren und Inbetriebnehmen einer automatisierten Vorrichtung mit
- einem ersten Engineeringsystem zum Erstellen eines ersten Teils eines Automatisierungsprogramms, mit dem die automatisierte Vorrichtung steuerbar ist,
- einem zweiten Engineeringsystem zum Erstellen eines zweiten Teils des Automatisierungsprogramms,
- einem ersten Datennetz, an das das erste Engineeringsystem angeschlossen ist, und
- einem zweiten Datennetz, an das das zweite Engineeringsystem angeschlossen ist, wobei
- das erste Datennetz mit dem zweiten Datennetz in Kommunikationsverbindung steht, so dass Daten zwischen dem ersten Engineeringsystem und dem zweiten Engineeringsystem austauschbar sind, wobei
- eine Verschlüsselungsschnittstelleneinrichtung zwischen das ersten Datennetz und das zweite Datennetz geschaltet ist, die eine Kommunikationsschnittstelle zwischen beiden Datennetzen bildet und mit der die Daten beim Austausch zwischen dem ersten Engineeringsystem und dem zweiten Engineeringsystem verschlüsselbar oder entschlüsselbar sind.

Darüber hinaus wird erfindungsgemäß bereitgestellt ein Verfahren zum Projektieren und Inbetriebnehmen einer automatisierten Vorrichtung durch
- Erstellen eines ersten Teils eines Automatisierungsprogramms, mit dem die automatisierte Vorrichtung steuerbar ist, mit einem ersten Engineeringsystem,
- Erstellen eines zweiten Teils des Automatisierungsprogramms mit einem zweiten Engineeringsystem,
- Bereitstellen eines ersten Datennetzes, an das das erste Engineeringsystem angeschlossen ist, und
- Bereitstellen eines zweiten Datennetzes, an das das zweite Engineeringsystem angeschlossen ist, sowie
- Austauschen von Daten zwischen dem ersten Engineeringsystem und dem zweiten Engineeringsystem über das erste Datennetz und das zweite Datennetz, wobei
- eine Verschlüsselungsschnittstelleneinrichtung zwischen dem ersten Datennetz und dem zweiten Datennetz bereitgestellt wird, die eine Kommunikationsschnittstelle zwischen beiden Datennetzen bildet und mit der die Daten beim Austausch zwischen dem ersten Engineeringsystem und dem zweiten Engineeringsystem verschlüsselt oder entschlüsselt werden.

In vorteilhafter Weise erfolgt also bei der erfindungsgemäßen Engineeringanordnung eine automatische Verschlüsselung wenn Daten zwischen zwei Engineeringsystemen ausgetauscht werden, die über zwei Datennetze miteinander verbunden sind. Diese automatische Verschlüsselung wird an der Schnittstelle zwischen den beiden Datennetzen durch eine Verschlüsselungsschnittstelleneinrichtung, insbesondere einen Verschlüsselungsproxy, realisiert. Damit muss die Verschlüsselung der Daten nicht in den einzelnen Engineeringsystemen erfolgen und die Anwender müssen sich nicht um die hierfür notwendigen Passwörter kümmern.

Vorzugsweise ist mit dem ersten und zweiten Engineeringsystem die Verschlüsselungsschnittstelleneinrichtung so steuerbar, dass nur ein Teil der über die Verschlüsselungsschnittstelleneinrichtung übertragenen Daten verschlüsselt oder entschlüsselt wird. Dies hat den Vorteil, dass beim Entwickeln eines Automatisierungsprogramms bzw. Automatisierungsprojekts durch eine Firma ein externer Mitarbeiter das Automatisierungsprojekt teilverschlüsselt erhalten kann. An unverschlüsselten Funktionsbausteinen des Automatisierungsprojekts kann der externe Mitarbeiter arbeiten, wogegen ihm die verschlüsselten Funktionsbausteine verborgen bleiben.

Alternativ besteht auch die Möglichkeit, dass mit der Verschlüsselungsschnittstelleneinrichtung ein Funktionsbaustein des Automatisierungsprogramms mit einem ersten Schlüssel und das gesamte Automatisierungsprogramm zusätzlich mit einem zweiten Schlüssel verschlüsselbar ist. Dies hat den Vorteil, dass wegen der Verschlüsselung des gesamten Automatisierungsprogramms auch öffentliche Datennetze für die Datenübermittlung genutzt werden können. Für einen externen Mitarbeiter wird dann das gesamte Automatisierungsprogramm mit dem zweiten Schlüssel entschlüsselt, aber die Funktionsbausteine, die mit dem ersten Schlüssel verschlüsselt sind, bleiben auch dem externen Mitarbeiter verborgen. Er kann aber an den unverschlüsselten Funktionsbausteinen mitarbeiten.

Das erste Datennetz kann ein Firmennetzwerk sein. An einem derartigen Firmennetzwerk bzw. Intranet können auf Seiten des Herstellers des Automatisierungsprogramms mehrere Mitarbeiter vernetzt an dem Automatisierungsprogramm arbeiten (Multi-User-Engineeringsystem).

Das zweite Datennetz kann das Internet oder ein anderes öffentliches Datennetz sein. Damit lässt sich durch die erfindungsgemäße Engineeringanordnung gewährleisten, dass automatisch eine Verschlüsselung an der Schnittstelle zwischen dem ersten Datennetz und dem öffentlichen zweiten Datennetz erfolgt.

Die Verschlüsselungsschnittstelleneinrichtung kann so ausgebildet sein, dass sie ein oder mehrere Passwörter zum Verschlüsseln oder Entschlüsseln speichert oder selbst erzeugt. Dies hat den Vorteil, dass die einzelnen Mitarbeiter die Passwörter für die Verschlüsselung nicht verwalten bzw. kennen müssen.

Darüber hinaus kann die Verschlüsselungsschnittelleneinrichtung so ausgebildet sein, dass von ihr Daten des Automatisierungsprogramms erkennbar sind, sodass nur solche bei einer Kommunikation zwischen den beiden Datennetzen verschlüsselt oder entschlüsselt werden. Es erfolgt also eine automatische, selektive Verschlüsselung, weshalb beispielsweise weniger kritische Daten unverschlüsselt zwischen den beiden Datennetzen bzw. den Engineeringsystemen ausgetauscht werden können. Außerdem kann die Verschlüsselungsschnittstelleneinrichtung ein Verschlüsselungsverfahren und ein Verschlüsselungsformat nutzen, welche auch in einem der Engineeringsysteme nutzbar sind. Hierdurch ist es möglich, dass ein Engineeringsystem auch dann auf verschlüsselte Daten zugreifen kann, wenn der Verschlüsselungsproxy die Entschlüsselung nicht vornimmt oder nicht vornehmen kann.

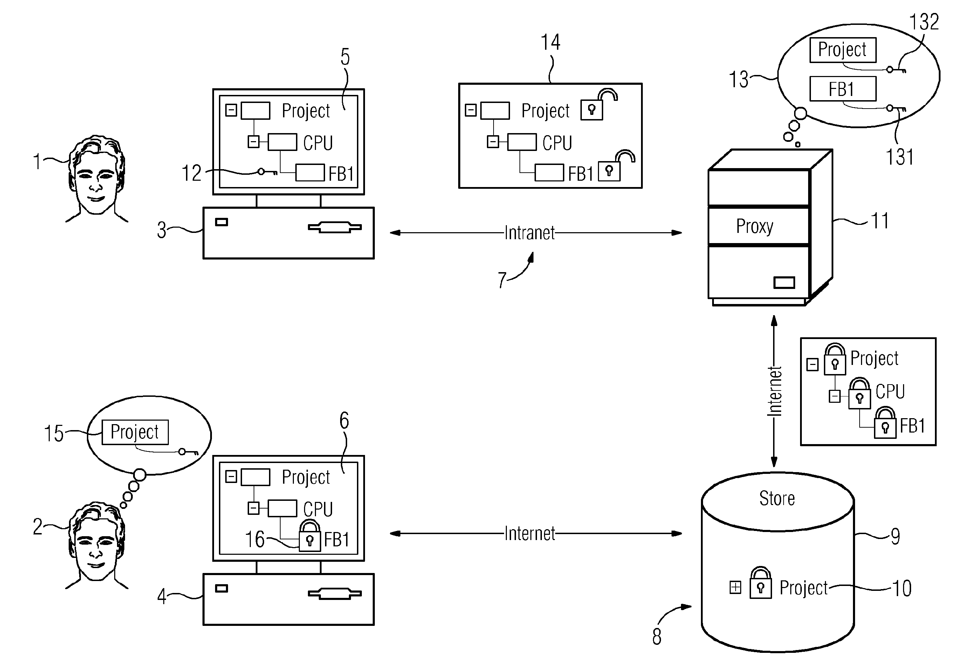

Die vorliegende Erfindung wird nun anhand der beigefügten Zeichnung näher erläutert, die einen Datenflussplan einer erfindungsgemäßen Engineeringanordnung wiedergibt.

Die nachfolgend näher geschilderten Ausführungsbeispiele stellen bevorzugte Ausführungsformen der vorliegenden Erfindung dar.

Eine erfindungsgemäße Engineeringanordnung besitzt die in der Figur angedeutete Struktur. Die Engineeringanordnung dient zum Projektieren und Programmieren von Automatisierungslösungen für eine automatisierte Vorrichtung bzw. Anlage. Mit der Engineeringanordnung können mehrere Mitarbeiter bzw. Anwender 1, 2 ortsunabhängig an einem Automatisierungsprojekt mitarbeiten. Die Anwender 1, 2 verfügen üblicherweise über einen Arbeitsplatzrechner 3, 4 (z. B. ein PC) auf dem ein Engineeringsystem 5, 6 installiert ist. Der Anwender 1 ist beispielsweise Mitarbeiter derjenigen Firma, die das Automatisierungsprojekt herstellt. Sein Arbeitsplatzrechner 3 ist firmenintern über ein Firmennetzwerk bzw. ein Intranet 7 mit anderen Arbeitsplatzrechnern (in der Figur nicht dargestellt) vernetzt. Der Anwender 2 stellt einen externen Partner dar, dessen Arbeitsplatzrechner 4 über das Internet 8 mit der Herstellerfirma und insbesondere dem Intranet 7 verbunden ist.

Das Internet 8 besitzt ggf. eine Speichereinrichtung 9, in der das Automatisierungsprojekt 10 gespeichert werden kann.

Die Schnittstelle zwischen dem firmeninternen Intranet und dem öffentlichen Internet bildet eine Verschlüsselungsschnittstelleneinrichtung, hier ein Verschlüsselungsproxy 11. Er handhabt nicht nur die Datenkommunikation zwischen dem Intranet 7 und dem Internet 8 mit den unterschiedlichen Protokollen, sondern er dient auch zur automatischen Verschlüsselung und Entschlüsselung beim Datentransfer.

Der Verschlüsselungsproxy 11 kann für unterschiedliche Verschlüsselungsebenen verwendet werden: für die Verschlüsselung einzelner Objekte und/oder die Verschlüsselung des gesamten Projekts.

Bei der Verschlüsselung einzelner Objekte (Teile des Automatisierungsprogramms, z. B. Funktionsbausteine) werden die zu schützenden Objekte durch den Anwender im Engineeringsystem/Automatisierungsprojekt entsprechend markiert. Der Anwender 1 markiert beispielsweise die Objekte, die verschlüsselt werden sollen, sodass die nicht markierten Objekte unverschlüsselt bleiben. Die Verschlüsselung wird nicht durch das Engineeringsystem 5, 6 durchgeführt, sondern vom Verschlüsselungsproxy 11, sobald die Daten des Automatisierungsprojekts die Grenzen des Firmennetzwerks bzw. Intranet 7 verlassen. Dazu analysiert der Verschlüsselungsproxy 11 den Datenstrom und erkennt die Markierung an den zu schützenden Objekten. Die Klardaten der so erkannten Objekte werden im Datenstrom durch verschlüsselte Daten ersetzt. Der einzelne Anwender muss nun kein Passwort für die Verschlüsselung angeben und er muss sich das Passwort auch nicht für die Entschlüsselung merken. Diese Erleichterung schafft der Verschlüsselungsproxy 11, der sich die notwendigen Passwörter entweder speichert oder selbst erzeugt und für die spätere Entschlüsselung vorhält.

Bei der Verschlüsselung des gesamten Projekts erkennt der Verschlüsselungsproxy 11 im Datenstrom die Daten des Automatisierungsprojekts und verschlüsselt diese. Umgekehrt wird beim Rücklesen der Daten das gesamte Automatisierungsprojekt entschlüsselt. Dabei muss nicht zwangsweise immer das komplette Projekt zwischen dem internen und externen Netzwerk geschrieben werden. Es ist auch möglich, dass lediglich einzelne Datensätze des Automatisierungsprojekts übertragen werden. Dies ist beispielsweise dann der Fall, wenn beispielsweise das Automatisierungsprojekt an einem über das Internet erreichbaren Ort gespeichert ist, und der Anwender direkt auf diesem Automatisierungsprojekt arbeitet. In diesem Fall wird nicht das gesamte Projekt übertragen, sondern nur die vom Engineeringsystem angeforderten Daten, sodass der Anwender die gewünschten Aktionen im Engineeringsystem durchführen kann. Auch hierbei sorgt der Verschlüsselungsproxy 11 für die transparente Entschlüsselung in Leserichtung und Verschlüsselung in Schreibrichtung. Der Verschlüsselungsproxy 11 benutzt vorzugsweise für die Verschlüsselung ein Verfahren und ein Format, das auch im Engineeringsystem 5, 6 bekannt ist. Damit kann das Engineeringsystem 5, 6 auf die Projektdaten, die Eingabe der notwendigen Passwörter vorausgesetzt, auch ohne Verschlüsselungsproxy 11 zugreifen.

Der Einsatz eines Verschlüsselungsproxy ermöglicht somit die einfache Verwendung von Verschlüsselungstechnologien für den Schutz von Know-How in einem Automatisierungsprojekt. Der Verschlüsselungsproxy ermöglicht zudem das ungehinderte Arbeiten mit nach außen hin verschlüsselten Daten innerhalb des firmeninternen Netzwerks. Spezielle Maßnahmen zur Verwaltung von Passwörtern oder deren Kommunikation zwischen den Mitarbeitern sind nicht notwendig. Damit verringert sich die Gefahr, dass Passwörter an Unbefugte weitergegeben werden.

Nachfolgend wird ein konkretes Beispiel anhand der Figur erläutert. Wie erwähnt arbeiten die Anwender 1 und 2 gemeinsam an einem Automatisierungsprojekt. Als Ablageort für das Automatisierungsprojekt wird der über das Internet erreichbare Speicher 9 genutzt. Das Projekt soll insgesamt verschlüsselt werden, da der Speicher 9 potentiell auch für Dritte zugänglich ist. Zusätzlich steckt noch besonderes Know-How von Anwender 1 im Funktionsbaustein FB1 des Automatisierungsprojekts. Deshalb versieht der Anwender 1 diesen Funktionsbaustein FB1 mit einem zusätzlichen Schutz. Er nimmt daher eine entsprechende Markierung 12 vor.

An der Schnittstelle des Intranet 7, in dem der Anwender 1 arbeitet, und dem Internet 8 ist der Verschlüsselungsproxy 11 eingesetzt. Der Verschlüsselungsproxy 11 kennt" die Schlüssel 13 für die Verschlüsselung des gesamten Projekts und für die Verschlüsselung des Funktionsbausteins FB1. Im Intranet 7 des Anwenders 1 bleiben das Automatisierungsprojekt selbst und die darin enthaltenen Funktionsbausteine unverschlüsselt, was durch die Symbole 14 in der Figur angedeutet ist.

Der Funktionsbaustein FB1 ist im Engineeringsystem 5 durch die Markierung 12 als Know-How-relevant markiert. Für alle Mitarbeiter des Anwenders 1 im Intranet 7 ist der Zugang zu diesem Funktionsbaustein FB1 trotzdem jederzeit möglich. Nach außen hin, z. B. beim Speichern des Projekts in der Internet-Speichereinrichtung 9, sorgt der Verschlüsselungsproxy 11 für die Verschlüsselung. Zuerst erfolgt die Verschlüsselung des Funktionsbausteins FB1 mit dem zugehörigen Schlüssel 131 (erster Schlüssel), bevor zusätzlich das gesamte Projekt mit dem Projektschlüssel 132 (zweiter Schlüssel) verschlüsselt wird.

Bei dem Anwender 2, dessen Arbeitsplatzrechner 4 hier direkt mit dem Internet 8 verbunden ist, wird kein Verschlüsselungsproxy eingesetzt. Daher muss der Anwender 2 das Passwort für den Schlüssel 15 des Projekts kennen, um darauf arbeiten zu können. Das Passwort für den Funktionsbaustein FB1 kennt der Anwender 2 nicht. Daher kann er den Inhalt von Funktionsbaustein FB1 nicht einsehen, was durch das Symbol 16 angedeutet ist.

### Bezugszeichenliste

- 1,2: Anwender
- 3, 4: Arbeitsplatzrechner
- 5, 6: Engineeringsystem
- 7, 8: Datennetz
- 9: Speichereinrichtung
- 10: Automatisierungsprojekt
- 11: Verschlüsselungsschnittstelleneinrichtung
- 12: Markierung
- 13, 131, 132: Schlüssel
- 14: Symbole
- 15: Schlüssel
- 16: Symbol

## Patentansprüche

1. Engineeringanordnung zum Projektieren und Inbetriebnehmen einer automatisierten Vorrichtung mit
- einem ersten Engineeringsystem (5) zum Erstellen eines ersten Teils eines Automatisierungsprogramms (10), mit dem die automatisierte Vorrichtung steuerbar ist,
- einem zweiten Engineeringsystem (6) zum Erstellen eines zweiten Teils des Automatisierungsprogramms (10),
- einem ersten Datennetz (7), an das das erste Engineeringsystem (5) angeschlossen ist, und
- einem zweiten Datennetz (8), an das das zweite Engineeringsystem (6) angeschlossen ist, wobei
- das erste Datennetz (7) mit dem zweiten Datennetz (8) in Kommunikationsverbindung steht, so dass Daten zwischen dem ersten Engineeringsystem und dem zweiten Engineeringsystem austauschbar sind,
**dadurch gekennzeichnet, dass**
- eine Verschlüsselungsschnittstelleneinrichtung (11) zwischen das erste Datennetz (7) und das zweite Datennetz (8) geschaltet ist, die eine Kommunikationsschnittstelle zwischen beiden Datennetzen bildet und mit der die Daten beim Austausch zwischen dem ersten Engineeringsystem (5) und dem zweiten Engineeringsystem (6) verschlüsselbar oder entschlüsselbar sind.

2. Engineeringanordnung nach Anspruch 1, wobei mit dem ersten und zweiten Engineeringsystem (5, 6) die Verschlüsselungsschnittstelleneinrichtung (11) so steuerbar ist, dass nur ein Teil der über die Verschlüsselungsschnittstelleneinrichtung übertragenen Daten verschlüsselt oder entschlüsselt wird.

3. Engineeringanordnung nach Anspruch 1 oder 2, wobei das erste Datennetz (7) ein Firmennetzwerk ist.

4. Engineeringanordnung nach einem der vorhergehenden Ansprüche, wobei das zweite Datennetz (8) das Internet ist.

5. Engineeringanordnung nach einem der vorhergehenden Ansprüche, wobei die Verschlüsselungsschnittstelleneinrichtung (11) so ausgebildet ist, dass sie ein oder mehrere Passwörter zum Verschlüsseln oder Entschlüsseln speichert oder selbst erzeugt.

6. Engineeringanordnung nach einem der vorhergehenden Ansprüche, wobei die Verschlüsselungsschnittstelleneinrichtung so ausgebildet ist, dass von ihr Daten des Automatisierungsprogramms erkennbar sind, sodass nur solche bei einer Kommunikation zwischen den beiden Datennetzen (7, 8) verschlüsselt oder entschlüsselt werden.

7. Engineeringanordnung nach einem der vorhergehenden Ansprüche, wobei die Verschlüsselungsschnittstelleneinrichtung (11) ein Verschlüsselungsverfahren und Verschlüsselungsformat nutzt, welche auch in einem der Engineeringsysteme (5, 6) nutzbar sind.

8. Engineeringanordnung nach einem der vorhergehenden Ansprüche, wobei mit der Verschlüsselungsschnittstelleneinrichtung (11) ein Funktionsbaustein des Automatisierungsprogramms mit einem ersten Schlüssel (131) und das gesamte Automatisierungsprogramm zusätzlich mit einem zweiten Schlüssel (132) verschlüsselbar ist.

9. Verfahren zum Projektieren und Inbetriebnehmen einer automatisierten Vorrichtung durch
- Erstellen eines ersten Teils eines Automatisierungsprogramms (10), mit dem die automatisierte Vorrichtung steuerbar ist, mit einem ersten Engineeringsystem (5),
- Erstellen eines zweiten Teils des Automatisierungsprogramms (10) mit einem zweiten Engineeringsystem (6),
- Bereitstellen eines ersten Datennetzes (7), an das das erste Engineeringsystem (5) angeschlossen ist,
- Bereitstellen eines zweiten Datennetzes (8), an das das zweite Engineeringsystem (6) angeschlossen ist, und
- Austauschen von Daten zwischen dem ersten Engineeringsystem (5) und dem zweiten Engineeringsystem (6) über das erste Datennetz (7) und das zweite Datennetz (8), **dadurch gekennzeichnet, dass**
- eine Verschlüsselungsschnittstelleneinrichtung (11) zwischen dem ersten Datennetz (7) und dem zweiten Datennetz (8) bereitgestellt wird, die eine Kommunikationsschnittstelle zwischen beiden Datennetzen bildet und mit der die Daten beim Austausch zwischen dem ersten Engineeringsystem (5) und dem zweiten Engineeringsystem (6) verschlüsselt oder entschlüsselt werden.
